# EUROPEAN PATENT APPLICATION

(11) **EP 0 607 632 A1**
(43) Date of publication of application: **27.07.1994**
(21) Application number: 93203552.0
(22) Date of filing: 16.12.1993
(51) Int. Cl.: D03C 1/00, F16D 11/16

(54) **Rotary dobby**

(30) Priority: 18.12.1992 IT UD920183
(71) Applicant: Burigana, Lucio, I-33080 Roveredo In Piano (PN) (IT)
(72) Inventor: Burigana, Lucio, I-33080 Roveredo In Piano (PN) (IT)
(74) Representative: Da Riva, Ermanno

(57) **Abstract**

A rotary dobby with two mutually opposed ratchet levers (14, 15) mounted pivotably to a cam disk (12) impinging on a connecting rod (11), of which first ends are positioned to interact with two respective mating surfaces (20A, 20B) afforded by the periphery of a live disk (20) associated rigidly with a drive shaft (10), comprising a rocking lever (18) mounted to the cam disk (12), of which the fulcrum pivot (33) lies in a plane occupied by the axis of the drive shaft (10), disposed between the fulcrum pivots (40, 41) of the ratchet levers (14, 15) and positioned at a greater relative distance from the shaft (10); the rocking lever (18) affords a first and a second terminal contact appendage (18A, 18B) disposed symmetrically on either side of the plane occupied by the pivot (33) and by the shaft (10) and positioned to interact respectively with the ends of the ratchet levers (14, 15) remote from the first ends, also a control arm (18C) positioned on the side of the pivot (33) opposite from the terminal contact appendages (18A, 18B) and interacting for a predetermined duration with control means (45).

## Description

### TECHNICAL FIELD

The present invention relates to a rotary dobby as recited in the main claim appended.

A rotary dobby according to the invention finds application in the art field of textile manufacture, and in particular of power weaving looms.

Rotary dobbies of the type in question provide a means of transmitting movement desmodromically to the heald frames of a loom, through a rigid linkage, according to a programmed sequence implemented by means of an electronic device.

The object of the present invention is to set forth a mechanism for governing selection of the movement of the cam-controlled connecting rods, such as will be simple in embodiment, able to withstand stresses, and at the same time inexpensive to carry into effect.

A further object of the invention is to improve the performance of rotary dobbies, especially in the case of high speed jet looms.

### BACKGROUND ART

The prior art pertinent to the construction of rotary dobbies embraces a variety of methods by which to determine the selection of the movement transmitted to the connecting rods, hence to the heald frames which are associated with the rods by way of linkages.

Certain of these methods are based fundamentally on the coupling action of a key mounted slidably and radially on a cam disk in such a way as to engage in a socket of substantially rectangular shape afforded either by the drive shaft or by a live disk rigidly associated with the shaft.

This type of coupling affords a bilateral locking arrangement, resulting in the creation of a single body between the drive shaft and the cam disk which produces the oscillating movement of the rod.

Other solutions make use of one or more rocking levers mounted to the cam disk, which are designed similarly to couple with a matching socket afforded either by the drive shaft or by a live disk rigidly associated with the shaft.

All the prior art solutions in question are typified by one notable limitation, namely the need to suspend the rotation of the drive shaft for an interval of greater or lesser duration.

In effect, a pause is needed to allow engagement and disengagement of the coupling elements, be they sliding keys or levers, in and from the sockets of the drive shaft or live disk.

As to the methods and the mechanisms employed for effecting the engagement of the coupling elements with the drive shaft or live disk, the prior art embraces a number of different solutions.

These range from the more traditional mechanical linkages which make use of matching cams, with or without preselect, to direct acting electromagnetic devices using powerful solenoids.

In any event, all these solutions are invariably complex in embodiment and therefore costly to carry into effect.

Similarly, the indexing system by which the drive shaft is made to pause following each 180 rotation, allowing selection of the movement of the cam disk, will consist normally in a plurality of mechanical elements.

Such elements are generally paired cams, rockers, gears and sectors which must be precision engineered to guarantee satisfactory levels of performance in operation, and are therefore typified by high cost.

Moreover, the effect of the intermittent rotation described by the drive shaft, with pauses at each half revolution, is to generate strong accelerations in the movement of the heald frame, which are hardly desirable at the high operating speeds required in particular by jet looms.

In effect, and as persons skilled in the art will be aware, any increase in frequency of the movement transmitted to the heald frames must be accompanied by a reduction in the acceleration of the resulting movement.

Without such a reduction the system will generate strong moments of inertia, of an order sufficient to weaken the structure of mechanical components and to occasion significant breakages of the warp threads, jeopardizing the output of the loom irretrievably.

Attempts have been made to overcome the problems in question, associated with the intermittent motion of the drive shaft, by proposing solutions in which the cam disk is released temporarily from the drive shaft.

Devices featuring such a solution are designed to engage and disengage a cam disk, in this instance mounted rotatably in the bearing of the connecting rod operating the heald frame, with and from a drive shaft that rotates continuously.

Accordingly, such devices allow of dispensing with the indexing mechanism that would control the movement of an intermittently driven shaft, as well as reducing accelerations in the movement of the heald frames.

Further to this latter aspect, a person skilled in the art will be aware that the only means of obtaining low acceleration in the movement of the heald frames is to apply kinematic laws of harmonic motion or similar principles.

In the case of a rotary dobby, such movements are obtainable only with the drive shaft rotating at a constant angular velocity.

With this type of solution, centralized selection mechanisms are also rendered unnecessary.

In effect, the movements of the elements serving to connect the cam disk with the drive shaft are induced singly and automatically, simply exploiting the rotation of the main shaft itself.

To this end, the cam disk carries two oscillating levers functioning in the manner of a ratchet.

The two levers in question are arranged in such a way as to engage in totally symmetrical fashion with two mating surfaces afforded by the drive shaft, or by a disk rigidly associated with the drive shaft.

The mating surfaces extend virtually in a radial direction, disposed substantially in diametrical opposition.

The position occupied by the ratchet levers can be advanced relative to that of the mating surfaces afforded by the drive shaft.

Following the dead centre positions, the levers and mating surfaces engage and the cam disk is drawn into rotation.

In this way, to all intents and purposes, one has a preselect function that requires no pause in the rotation of the drive shaft.

DE-A-2909131 discloses a rotary dobby in which the ratchet levers are operated by a control device of conventional and unspecified embodiment neither illustrated nor described in the document; in this instance therefore, a clear and complete realization of the dobby cannot be deduced from the disclosure.

US-A-4625767 and US-A-4730641 disclose rotary dobbies in which the ratchet levers are operated by way of devices consisting in a plurality of elements such as guides, paired cams, rocker arms and large, powerful solenoids consuming considerable amounts of energy, etc., which must be precision engineered in order to ensure satisfactory levels of performance in operation and are thus typified by high cost.

Moreover, the overall dimensions of these patent solutions illustrated tend to disallow fitment to conventional types of power loom in which the space available to accommodate such devices is especially limited.

Also, the basic prior art solution in question comprises elements unable to withstand any prolonged exposure to the notable stresses generated during the operation of a rotary dobby, with the result that frequent stoppages are required in order to effect replacements, and productivity of the dobby is therefore notably reduced.

With the end in view of overcoming the problems associated with prior art solutions and securing other advantages besides, the applicant discloses a rotary dobby as designed, experimented and realized according to the present invention.

### DISCLOSURE OF THE INVENTION

The invention is recited and characterized in the main claim appended.

Variations on the principal solution disclosed are recited in the dependent claims.

A rotary dobby according to the present invention is of the type described in the foregoing preamble, wherein the drive shaft rotates at constant angular velocity and the cam disk affords two ratchet levers biased elastically by spring return means toward a position of contact with respective mating surfaces afforded by the live disk.

The dobby according to the invention comprises a selection device such as will allow of engaging and disengaging the cam disk automatically with and from the drive shaft, or a live disk rigidly associated with the shaft.

In this way, the movement of the heald frames in the loom can be made to follow a programmed sequence implemented by a suitable electronic monitoring and control device.

In a first embodiment of the selection device, the ratchet levers operate in conjunction with a rocking lever mounted pivotably to the cam disk, which in turn is mounted rotatably in the bearing of a connecting rod linked in conventional manner to the heald frames of the loom.

The rocking lever is mounted in an intermediate and symmetrical position between the two ratchet levers.

More exactly, the fulcrum pivot of the rocking lever lies in a plane passing through the axis of the drive shaft, and occupies a position equidistant between and beyond the fulcrum pivots of the ratchet levers, in relation to the shaft.

In one particular embodiment of the device, the rocking lever might project partially from the outer circumference of the cam disk in a radial direction.

The selection device according to the invention comprises control means consisting in two restraint levers occupying symmetrical positions outside the dimensional compass of the cam disk and independent of the connecting rod.

Each restraint lever is capable of oscillating movement between a position of non-interference, in which the rocking lever remains at liberty to rotate together with the cam disk, and a first and a second operating position, respectively right hand and left hand, of interaction with the rocking lever.

The left hand or right hand operating position will be determined by the direction of rotation of the drive shaft which, correspondingly, may be left or right.

With the restraint levers occupying the position of non-interference, the cam disk is free to rotate as one with the drive shaft, whilst with at least one restraint lever in either of its two operating positions, the cam disk remains motionless while the drive shaft continues to rotate idle.

More exactly, the connecting rod will come to a stop at its top or bottom dead centre, depending on which of the restraint levers is in the operating position.

In a preferred embodiment, the restraint levers might be operated by solenoid means of minimal power and dimensions, piloted by a suitable monitoring and control device.

On assuming the operating position, the restraint levers are caused to intercept a control arm rigidly associated with one extremity of the rocking lever, which is thus prevented from rotating with the cam disk and made to rotate on its pivot.

In the event that the two restraint levers are solenoid operated, the reception of an electrical signal by the solenoid will trigger the sequence of steps by which at least one of the ratchet levers is released to immobilize the cam disk at one or other dead centre.

The effect is to shift the relative core and the associated restraint lever, marginally before the cam disk reaches the selected dead centre.

Engaging thereupon with the end of the restraint lever, the control arm of the rocking lever stops, forcing the rocking lever itself to rotate on its pivot which is rigidly associated with the cam disk.

In this way, the oscillatory excursion of the rocking lever about its pivot will be proportional to the rotation of the cam disk, still associated rigidly with the live disk by way of the ratchet levers.

In a first embodiment of the invention, the clockwise or anticlockwise rotation imparted to the rocking lever is transmitted in identical fashion to one or other of the ratchet levers, according to the direction of rotation.

The selected ratchet lever is thereby released from the relative mating surface afforded by the live disk.

With the ratchet lever thus disengaged from the live disk, the cam disk ceases rotation on reaching the selected dead centre while the live disk and the associated drive shaft continue to rotate idle at substantially constant angular velocity.

As the drive shaft continues rotating freely, the remaining ratchet lever, still in contact with the periphery of the live disk affording the mating surfaces, will jump each time the mating surfaces are encountered.

The noise of the resultant jumping motion can be a source of annoyance, which is avoided according to the present invention by adopting a second type of solution.

In this second solution, the oscillating movement of the rocking lever is designed to unseat both the ratchet levers simultaneously, releasing each from its respective mating surface.

This is made possible by the introduction of two auxiliary levers, each operating in conjunction with a relative ratchet lever and, advantageously though not necessarily, oscillating about the same pivot as the corresponding ratchet lever.

The auxiliary levers interact one with another by way of meshing teeth in such a way that the rotation of one lever is accompanied by rotation of the other through an identical angle, though in the opposite direction.

In one particular embodiment according to the invention, each auxiliary lever affords a fixed pin designed to interact with the respective ratchet lever.

With each enforced excursion of the auxiliary levers, the fixed pins impinge each on the relative ratchet lever, causing it to oscillate on its pivot and unseat, thereby releasing the cam disk from the live disk.

The cam disk might afford a further lever mounted pivotably to the disk, carrying a wheel and biased elastically outwards against the connecting rod, of which the bearing presents two detent notches.

By locating in one of the two detent notches, the wheel ensures that the cam disk will remain stably positioned at the relative dead centre.

The entire sequence of steps takes place with the drive shaft continuing to rotate at constant angular velocity.

The position of the cam disk when at standstill, and therefore with the heald frame raised or lowered according to the timing, can be maintained for an indefinite period of time.

In effect, the position will continue to be held until such time as the selected solenoid receives a further electrical signal, whereupon the core shifts in the opposite direction and returns the restraint lever to the position of non-interference.

At this point the rocking lever is released, thus allowing the ratchet lever or levers to be reseated against the outer circumference of the cam disk by the action of corresponding spring return means.

The resulting oscillation of the ratchet lever or levers has the effect of restoring the rocking lever to its balanced position of symmetry, in relation to the ratchet levers.

With the ratchet levers now reseated against the mating surfaces of the live disk, the cam disk is once again locked onto the live disk and thereby rigidly associated with the continuously rotating drive shaft.

### DESCRIPTION OF THE DRAWINGS

The accompanying drawings, provided by way of example and implying no limitation, show certain preferred embodiments of the present invention:
- fig 1 illustrates the connecting rod of the rotary dobby, in the configuration with the cam disk in movement, complete with solenoids and restraint levers;
- fig 2 illustrates the connecting rod of fig 1 with the ratchet levers released, the cam disk at standstill and the drive shaft rotating idle;
- fig 3 shows the connecting rod of fig 1 with the cam disk at standstill, but about to be set in rotation;
- fig 4 shows a first alternative embodiment of the dobby shown in fig 1, in which one ratchet lever only is released at one time;
- fig 5a shows a second alternative embodiment of the dobby shown in fig 1, in which one ratchet lever only is released at one time;
- fig 5b is the section through C-C in fig 5a;
- fig 5c is the section through D-D in fig 5a;
- fig 6 illustrates an alternative embodiment of the dobby shown in fig 1.

### DESCRIPTION OF THE ILLUSTRATED EMBODIMENTS

Referring to the accompanying sheets of drawings, 25 denotes a rotary dobby according to the present invention, in its entirety.

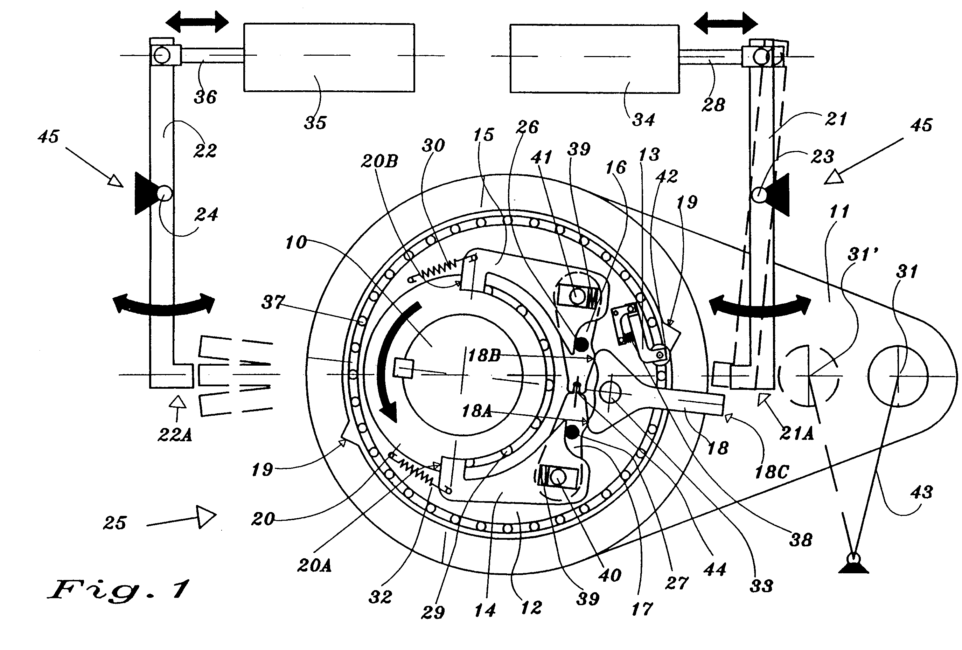

Figs 1, 2 and 3 illustrate a first embodiment of the automatic selection device according to the invention, in which the cam-driven connecting rod 11 of the rotary dobby 25 operates in conjunction with a drive shaft 10 rotating at a constant angular velocity.

20 denotes a live disk keyed permanently to the drive shaft 10 and exhibiting partial circumferences of dissimilar diameter, one larger and one smaller, which are interconnected by two mating surfaces, a first and a second denoted 20A and 20B respectively, extending in a substantially radial direction and diametrically opposed.

The preferred profile for such first and second mating surfaces 20A and 20B might be rectilinear, or alternatively crowned, or concave, according to the solution adopted.

In the particular example illustrated, the first and second mating surfaces 20A and 20B are offset in relation to the maximum diameter of the disk by a distance equivalent to half the width of a tooth afforded by the corresponding ends of a first and a second ratchet lever denoted 14 and 15 respectively.

The cam disk 12 is mounted rotatably to the live disk 20 by way of rolling bearing elements such as balls or rollers 29.

The rod 11 in turn is mounted to the periphery of the cam disk 12, by way of further rolling elements such as balls or rollers 37.

The head of the rod 11 connects rotatably with the lever 43 of a mechanical linkage not illustrated in the drawings, by way of a relative pivot 31.

Accordingly, successive half-revolutions of the cam disk 12 will produce an oscillating movement of the pivot 31 associated with the rod 11, between a first position indicated by the continuous line in figs 1 to 3, and a second position 31' indicated by phantom lines.

The first and second ratchet levers 14 and 15 are mounted pivotably to corresponding first and second pivots, denoted 40 and 41 respectively, afforded by the cam disk 12.

The selection device illustrated in figs 1 to 3 further comprises two auxiliary levers, a first and a second denoted 17 and 16 respectively, mounted to the same first and second pivots 40 and 41 of the ratchet levers.

The first and second auxiliary levers 17 and 16 are counter-rotating, connected mutually by way of meshing teeth 44.

Each auxiliary lever 17 and 16 carries a fixed pin denoted 27 and 26 respectively, positioned to interact with the first and with the second ratchet lever 14 and 15, respectively.

Also carried by the cam disk 12 is a rocking lever 18 mounted rotatably to a pivot 33.

The rocking lever 18 affords two terminal contact appendages at one end, a first and a second denoted 18A and 18B respectively, disposed in such a way as to interact with corresponding surfaces afforded by the first and second auxiliary levers 17 and 16, whilst the remaining end exhibits a control arm 18C extending, in the case of the example illustrated, beyond the dimensional compass of the cam disk 12.

In certain operating conditions, as described more fully in due course, the control arm 18C of the rocking lever 18 interacts for a given period with control means denoted 45.

In the example of the accompanying drawings, such control means 45 consist in the terminal portion 21A or 22A afforded by each of two restraint levers 21 and 22.

13 denotes an oscillating lever mounted to the cam disk 12, of which one end carries a wheel 42 and is tensioned by a compression spring 38 such that the wheel 42 remains in rolling contact with the circumferential bearing surface of the rod 11.

Subjected thus to the force of the compression spring 38, the wheel 42 is caused to locate in one of two V-shaped detent notches 19 afforded by the bearing of the rod 11.

34 and 35 denote solenoid means positioned at a distance from the connecting rod 11, and preferably above, which may be bistable or monostable according to the solution ultimately adopted.

In a solution according to the invention, at all events, such solenoid means 34 and 35 will be of low rated power, hence with minimal energy consumption and dimensions, in view of the modest effort each is required to produce.

Piloted by an electronic pattern monitoring and control device of conventional embodiment, not shown in the drawings, the solenoid means serve to govern the selection of the movement transmitted to the cam disk 12, and therefore to the heald frame associated with the disk.

The moving cores 28 and 36 of the solenoid means 34 and 35 are connected to the respective restraint levers 21 and 22, which oscillate on corresponding pivots 23 and 24.

The aforementioned terminal portions 21A and 22A of the restraint levers 21 and 22 are located at the ends remote from the solenoid cores 28 and 36, and embodied as catches.

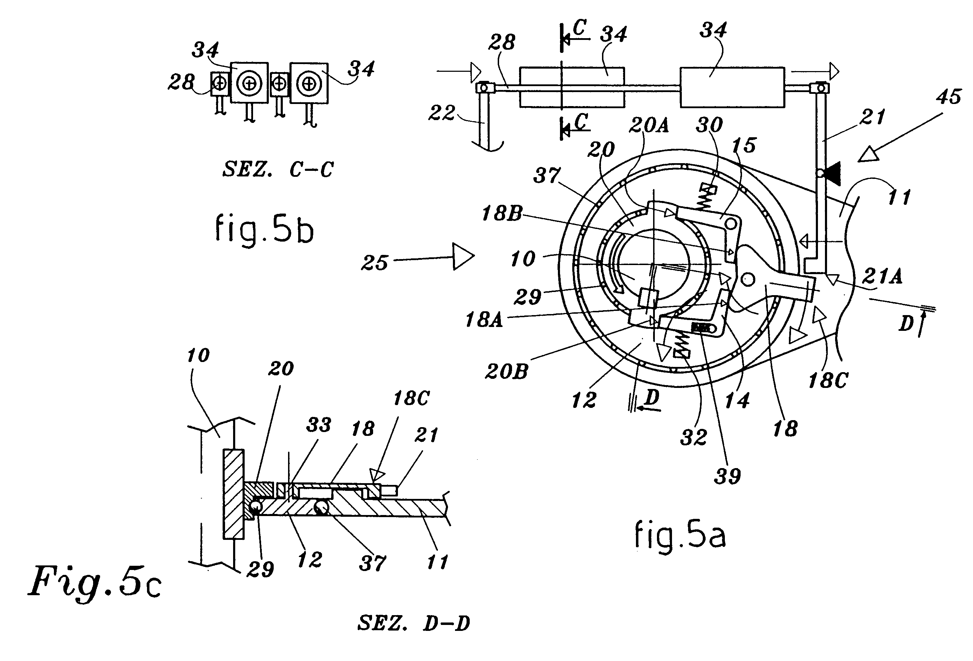

In the alternative solution of fig 5, solenoid means consist in just one bistable, double-acting solenoid 34 with a single core 28, to which both of the two restraint levers 21 and 22 are attached.

When an electrical signal is supplied to the solenoid means 34 in the rotary dobby 25 of fig 5, the core 28 shifts and the two restraint levers 21 and 22 are made to rotate simultaneously about their respective pivots 23 and 24.

The solution of fig 5 thus affords a simplified construction of the selection device, given that the number of solenoids required is reduced by half, and more space made available for the positioning of the one solenoid 34 utilized.

The operation of the selection device according to the invention will now be described, considering the various steps in turn.

With reference to fig 1, in particular, the first and second ratchet levers 14 and 15 will be seen to occupy a position of engagement with the respective mating surfaces 20A and 20B of the live disk 20.

More exactly, the two ratchet levers 14 and 15, respectively first and second, are held elastically in the position of engagement through the agency of corresponding return springs 32 and 30.

In this situation, the cam disk 12 is forced to rotate as one with the live disk 20 and thus induce an oscillating movement in the pivot 31 associated with the rod 11, in conventional manner, between the first position indicated by the continuous line and the second position 31' shown in phantom line.

As a result, the heald frame associated with the rod 11 by way of the relative linkage will raise and lower the warp threads as programmed.

The oscillating movement continues until such time as an electrical signal is applied to either of the solenoid means 34 or 35.

The timing of the electrical signal in question is determined by a weave program loaded into and run by the electronic monitoring and control device of the rotary dobby 25 according to the invention.

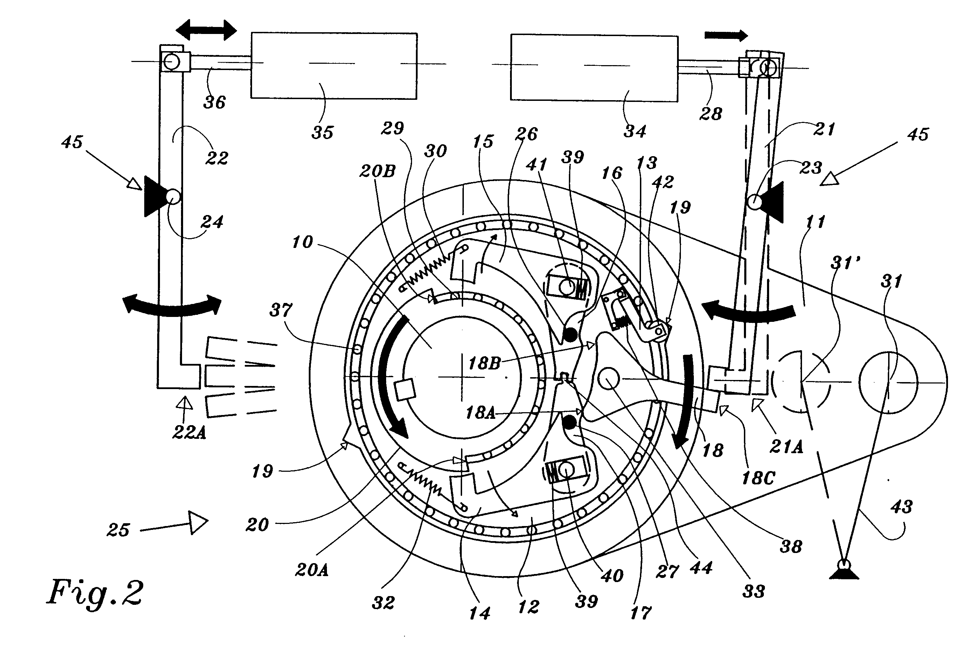

Fig 2 shows the situation in which the signal has been applied to the solenoid means denoted 34, with the result that the core 28 shifts and causes the first restraint lever 21 to rock on its pivot 23.

The terminal catch portion 21A thus intercepts the revolving trajectory described by the control arm 18C of the rocking lever 18.

With the control arm 18C and the terminal catch portion 21A now interlocked, the rocking lever 18 is prevented from rotating with the disk and forced to rock on its pivot 33.

However, as the live disk 20 is locked to the drive shaft 10 and continues to rotate at a constant angular velocity, the cam disk 12 likewise continues to be carried in rotation, with the result that the rocking lever 18 is forced to turn clockwise on its pivot 33 as indicated by the arrow in fig 2.

In consequence the first contact appendage 18A is made to press against the first auxiliary lever 17, which rocks on the corresponding first pivot 40.

The movement thus induced in the first auxiliary lever 17 is transmitted by the action of the meshing teeth 44 to the second auxiliary lever 16, which duly describes a coordinated rotation.

More exactly, the auxiliary levers rotate toward the drive shaft 10 with the effect, thanks to the presence of the pins 27 and 26, that the first and second ratchet levers 14 and 15 are spread apart.

Thus, the first and second ratchet levers 14 and 15 are unseated from the respective first and second mating surfaces 20A and 20B of the live disk 20, at the same time overcoming the restraining action of the return springs 32 and 30.

With the detent lever 13 biased outwards by the compression spring 38, the wheel 42 is forced to locate in the V-shaped notch 19, thereby locking the cam disk 12 in the relative dead centre position and positioning the corresponding heald frame.

Thus, the first and second ratchet levers 14 and 15 are fully spread apart on the one hand, whilst on the other, the cam disk 12 is locked stably in the dead centre position.

As the cam disk 12 is brought to a standstill, the kinetic energy of its rotation discharges into the elastic system composed of the return springs 30 and 32 and the compression spring 38.

If a signal is applied to the remaining solenoid means 35, the same sequence and the same release mechanism of the first and second ratchet levers 14 and 15 will be triggered by way of the corresponding restraint lever 22.

Lastly, the same functions occur if the direction of rotation of the drive shaft 10 is reversed, for example during weft detection, thanks to the perfect symmetry of the selection device according to the invention.

In this instance, when the appropriate signal is applied to the relative solenoid means 34 or 35, the restraint lever 21 or 22 of the control means 45 will meet the rocking lever in the second operating position.

With the cam disk 12 and the corresponding heald frame thus rendered motionless, the drive shaft 10 and the rigidly associated live disk 20 are free to rotate idle indefinitely.

This situation will persist until such time as a signal is generated by the electronic weave pattern monitoring and control device to reposition the heald frame, in which case the cam disk 12 must again be coupled to the live disk 20 by way of the first and second ratchet levers 14 and 15.

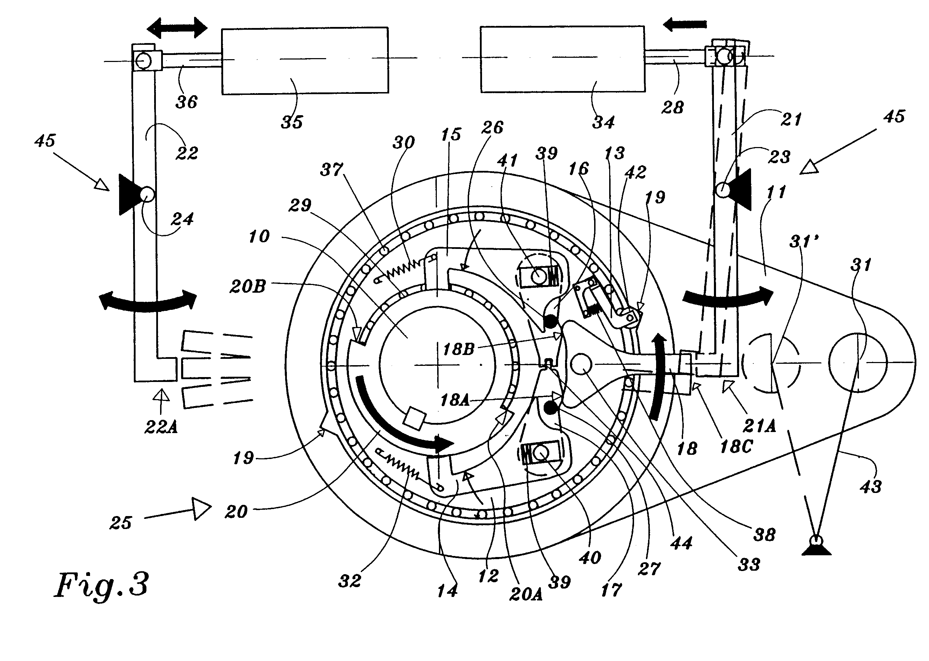

In fig 3, which illustrates the step in question, the solenoid means 34 have received an electrical signal opposite to the preceding signal and duly returned the core 28 to its former position.

As a result, the first restraint lever 21 has rotated on its pivot 23 in the direction of the arrow, releasing the control arm 18C of the rocking lever 18 from the terminal catch portion 21A.

Being thus at liberty to rotate anticlockwise, the rocking lever 18 is repositioned in the radial direction through the agency of the return spring 30 impinging on the second ratchet lever 15.

In consequence, the second ratchet lever 15 is brought to bear against the lesser circumference of the live disk 20.

Similarly, the first ratchet lever 14 is brought into contact with the greater circumference of the live disk 20 through the agency of the corresponding return spring 32.

Normally speaking, the timing of this particular step is advanced in relation to the moment in which the first and second mating surfaces 20A and 20B are brought into contact with the corresponding teeth of the respective first and second ratchet levers 14 and 15.

It will be observed, in the example illustrated, that the first mating surface 20A is set back in relation to the tooth of the second ratchet lever 15 about to reseat.

It will be observed also that as contact is made between the first mating surface 20A and the tooth of the second ratchet lever 15, the two parts must necessarily meet with a certain impact resulting from their relative velocity.

To reduce the negative effect of such an impact, the dobby further comprises two damper springs 39 interposed respectively between the first and second ratchet levers 14 and 15 and the corresponding first and second pivots 40 and 41.

The moment that contact is brought about between the first mating surface 20A and the second ratchet lever 15, the first ratchet lever 14 on the opposite side, tensioned by its return spring 32, will be brought to bear against the lesser circumference of the live disk 20 and into contact ultimately with the second mating surface 20B.

In this way, the live disk 20 and the cam disk 12 are united by a bilateral locking action.

Accordingly, the cam disk 12 begins once again to rotate together with the live disk 20, and movement is transmitted to the associated heald frame in the manner of fig 1.

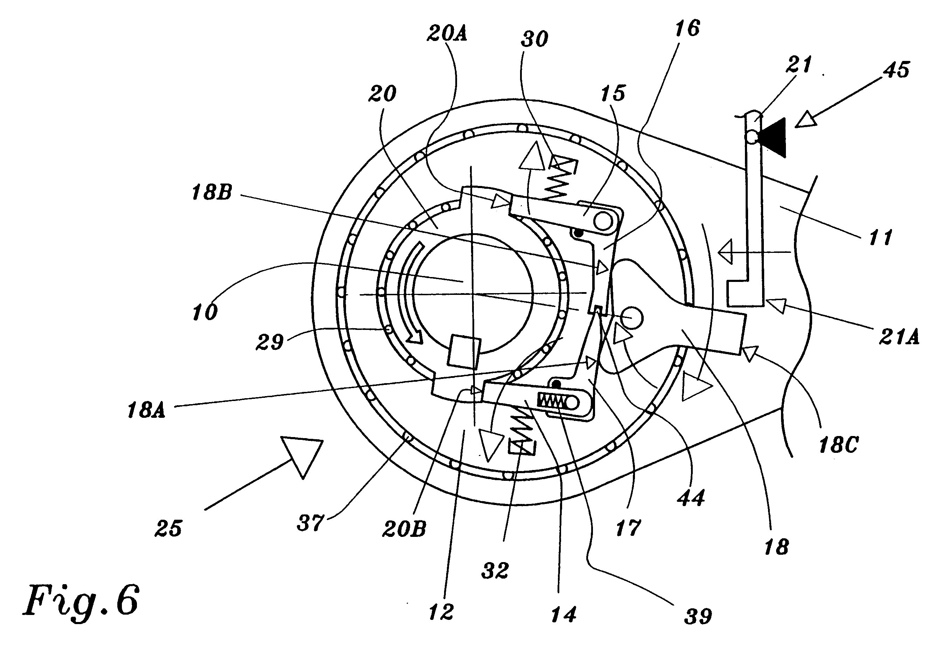

Fig 6 illustrates an alternative embodiment of the rotary dobby shown in figs 1 to 3.

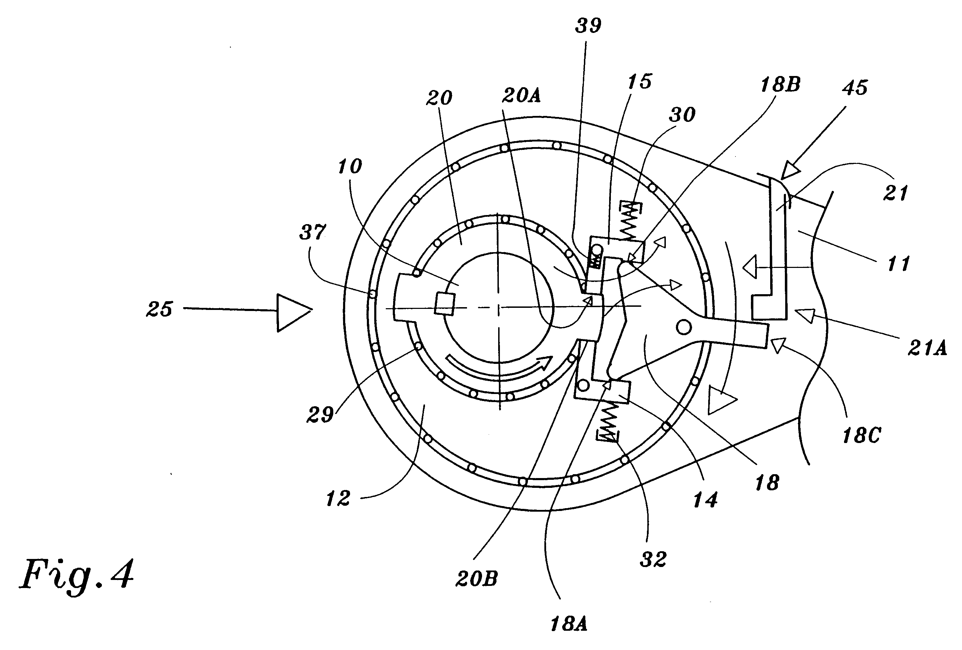

Figs 4 and 5 show variations in the embodiment of the selection device, by way of example, relating primarily to the first and second ratchet levers 14 and 15 which serve to connect and disconnect the live disk 20 and the cam disk 12.

The solutions in question utilize substantially the same type of rocking lever 18, which in this instance is made to release only one ratchet lever, first 14 or second 15, and by direct action.

In effect, the auxiliary levers 16 and 17 are no longer utilized, and the first and second ratchet levers 14 and 15 exhibit an essentially right angled geometry.

In these types of embodiment, furthermore, the meshing teeth 44 are eliminated and the first and second ratchet levers 14 and 15 remain independent of one another, operating one at a time.

Observing the examples illustrated, in which the drive shaft 10 rotates anticlockwise and the first restraint lever 21 is the lever shown in operation, the control arm 18C of the rocking lever 18 will be seen to interact with the terminal catch portion 21A of the lever 21 in question.

As a result, in the case of fig 4, the rocking lever 18 will rotate clockwise on its pivot 33 and cause the second ratchet lever 15 to swing outwards, releasing the cam disk 12 from the live disk 20.

In the embodiment of fig 5, the rocking lever 18 again rotates clockwise on its pivot 33, though in this instance unseating the first ratchet lever 14 to release the cam disk 12 from the live disk 20.

The solutions of figs 4 and 5 will be seen to retain the symmetry of operation, described above, in the event that the direction of rotation of the drive shaft 10 is reversed, for example during weft detection.

## Claims

1. A rotary dobby comprising two mutually opposed ratchet levers (14, 15) mounted pivotably to a cam disk (12) impinging on a connecting rod (11), of which first ends are positioned to interact with two respective mating surfaces (20A, 20B) afforded by the periphery of a live disk (20) associated rigidly with a drive shaft (10),
characterized
in that it comprises a rocking lever (18) mounted to the cam disk (12), of which the fulcrum pivot (33) lies in a plane occupied by the axis of the drive shaft (10), disposed between the fulcrum pivots (40, 41) of the ratchet levers (14, 15) and positioned at a greater relative distance from the shaft (10); and in that the rocking lever (18) affords a first and a second terminal contact appendage (18A, 18B) disposed symmetrically on either side of the plane occupied by the pivot (33) and by the shaft (10) and positioned to interact respectively with the ends of the ratchet levers (14, 15) remote from the first ends, also a control arm (18C) positioned on the side of the pivot (33) opposite from the terminal contact appendages (18A, 18B) and interacting for a predetermined duration with control means (45).

2. A rotary dobby as in claim 1, wherein the control means (45) are capable of assuming a position of non-interference and a first right hand operating position or a second left hand operating position, each of which corresponds to a respective position assumed by the rocking lever (18).

3. A rotary dobby as in claim 1 or 2, wherein the control means (45) comprise solenoid means (34, 35) operated by an electronic monitoring and control device.

4. A rotary dobby as in any of the preceding claims, wherein the control means (45) comprise restraint lever means (21, 22) of which the function is to determine the respective first right hand and second left hand operating positions, and consequently the corresponding positions of the rocking lever (18) and the ratchet levers (14, 15), for a predetermined duration.

5. A rotary dobby as in any of the preceding claims, wherein the terminal contact appendages (18A, 18B) of the rocking lever (18) are associated with the corresponding ratchet levers (14, 15) by way of interlocking auxiliary levers (16,17).

6. A rotary dobby as in any of the preceding claims, wherein the auxiliary levers (16, 17) interlock by way of meshing gear teeth (44).

7. A rotary dobby as in any of the preceding claims, further comprising mutual alignment means (13, 42, 19) afforded by and operating between the rod (11) and the cam disk (12).

8. A rotary dobby as in any of the preceding claims, wherein mutual alignment means (13, 42, 19) comprise a wheel (42) freely associated with lever means (13) mounted pivotably to the cam disk (12) and biased elastically by spring means (38) away from the axis of the shaft (10), and notched detent means (19) afforded by the circumferential bearing surface of the rod (11).

9. A rotary dobby as in any of the preceding claims, wherein the ratchet levers (14, 15) are associated with damper springs (39).
